# EUROPÄISCHE PATENTSCHRIFT

(11) **EP 3 714 180 B1**
(45) Veröffentlichungstag und Bekanntmachung des Hinweises auf die Patenterteilung: **29.09.2021**
(21) Anmeldenummer: 17808832.4
(22) Anmeldetag: 21.11.2017
(51) Int. Cl.: F16D 48/06, F16F 15/00, F16D 23/12, F16D 125/36, F16H 48/34

(54) **VERFAHREN ZUR STEUERUNG EINES AKTUATORS FÜR EINE KUPPLUNG**
METHOD FOR CONTROLLING AN ACTUATOR FOR A CLUTCH
PROCÉDÉ DE COMMANDE D'UN ACTIONNEUR POUR MOYEN D'ACCOUPLEMENT

(43) Veröffentlichungstag der Anmeldung: 30.09.2020
(73) Patentinhaber: GKN AUTOMOTIVE LTD., Birmingham Business Park Birmingham West Midlands B37 7YE (GB)
(72) Erfinder: FITZ, Rudolf, 53844 Troisdorf (DE); ESCH, Eric, 53879 Euskirchen (DE)
(74) Vertreter: karo IP
(86) Internationale Anmeldenummer: PCT/EP2017/079947
(87) Internationale Veröffentlichungsnummer: WO 2019/101298

(56) Entgegenhaltungen:
- EP-A1- 0 863 330
- EP-A1- 3 101 297
- DE-A1-102005 061 268
- DE-C2- 10 065 355

## Beschreibung

Die vorliegende Erfindung betrifft ein Verfahren zur Steuerung eines Aktuators für eine Kupplung, insbesondere für eine Lamellenkupplung, bevorzugt für eine Kupplung, die an einer Seitenwelle eines Kraftfahrzeuges angeordnet ist, so dass durch das Schließen der Kupplung die ganze Achse (hier wird die aktuierte Kupplung als Booster bezeichnet) oder auch nur ein Rad (hier wird die aktuierte Kupplung als Twinster bezeichnet) des Kraftfahrzeuges mit einer Antriebseinheit des Kraftfahrzeuges drehmomentübertragend verbunden wird. Der Aktuator ist ein elektromechanischer Aktuator.

Der Aktuator umfasst einen elektrischen Antriebsmotor und eine Steuereinrichtung, einen Rampenmechanismus mit einer drehbaren ersten Scheibe (Stellring), die erste Rampen (Rillen) aufweist, einer nur entlang einer axialen Richtung verlagerbaren zweiten Scheibe (Stellring), die zweite Rampen (Rillen) aufweist, und Kugeln, die in den ersten Rampen und zweiten Rampen zwischen den Scheiben angeordnet sind sowie mindestens einer Feder zur Verlagerung der zweiten Scheibe entlang der axialen Richtung, aufweist.

Der Aufbau einer Kupplung und eines Aktuators ist z. B. aus der DE 100 65 355 C2 bekannt. Dort liegt der Fokus darauf, für den Aktuator einen schnellen Rücklauf mit einem gedämpften Anschlagverhalten zu realisieren. Dafür wird der Elektromotor angepasst betrieben, so dass kurz vor Erreichen einer Ausgangsstellung zur Erzeugung eines Bremsmomentes der Elektromotor entweder kurzgeschlossen oder eine positive Spannung an dem Elektromotor angelegt wird. Damit soll ein Anschlagen der Kugeln an den Rillenenden der Stellringe gedämpft und ein so erzeugter harter Stoß verhindert werden.

Der Komfort eines Kraftfahrzeugs soll stets verbessert werden. Insbesondere sind möglichst alle im Betrieb des Kraftfahrzeugs für einen Insassen des Kraftfahrzeuges hörbare Geräusche und spürbare Betriebskräfte aus dem Antriebsstrang zu reduzieren oder zu vermeiden.

Hiervon ausgehend ist es Aufgabe der vorliegenden Erfindung, die im Zusammenhang mit dem Stand der Technik geschilderten Probleme wenigstens teilweise zu lösen. Es soll insbesondere ein Verfahren zur Steuerung eines Aktuators für eine Kupplung vorgeschlagen werden, durch das eine weitere Reduzierung der hörbaren Geräusche oder spürbaren Betriebskräfte ermöglicht wird.

Hierzu trägt ein Verfahren gemäß den Merkmalen des Patentanspruchs 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Es wird ein Verfahren zur Steuerung eines Aktuators einer Aktuatoreinrichtung vorgeschlagen, wobei die Aktuatoreinrichtung zumindest eine Kupplung und einen Aktuator aufweist. Der Aktuator umfasst zumindest
- einen elektrischen Antriebsmotor und eine Steuereinrichtung,
- einen Rampenmechanismus mit einer drehbaren ersten Scheibe, die erste Rampen aufweist, einer nur entlang einer axialen Richtung verlagerbaren zweiten Scheibe, die zweite Rampen aufweist, und Kugeln, die in den ersten Rampen und zweiten Rampen zwischen den Scheiben angeordnet sind,
- mindestens eine Feder zur Verlagerung der zweiten Scheibe entlang der axialen Richtung.

Die erste Scheibe ist über den Antriebsmotor drehbar und durch den Rampenmechanismus damit die zweite Scheibe entlang einer ersten axialen Richtung zur Betätigung der Kupplung verlagerbar. Die zweite Scheibe ist durch die mindestens eine Feder entlang einer zweiten axialen Richtung verlagerbar und damit die erste Scheibe drehbar.

Die zweite Scheibe ist über einen Zapfen, der mit einer Nut an der zweiten Scheibe zusammenwirkt, gegenüber einer Drehung in einer Umfangsrichtung gesichert. Der Zapfen stützt sich zumindest in Abhängigkeit von einer Drehrichtung der ersten Scheibe an einer, in eine erste Umfangsrichtung weisende, erste Seitenfläche oder an einer, in eine zweite Umfangsrichtung weisende, zweiten Seitenfläche der Nut ab.

Das Verfahren umfasst bei einem bevorstehenden Abbremsen einer Drehbewegung des Antriebsmotors oder einer Umkehrung der Drehbewegung des Antriebsmotors zumindest die folgenden Schritte:
a) Feststellen einer aktuell vorliegenden Drehrichtung der ersten Scheibe und Bestimmen der Seitenfläche, an der der Zapfen sich während der Drehung der ersten Scheibe abstützt; und
zumindest eines von:
b) Ermittlung einer Vorspannkraft der mindestens einen Feder in Abhängigkeit von einer Position der zweiten Scheibe entlang der axialen Richtung; und
c) Ermittlung eines ersten Spiels zwischen dem Zapfen und der ersten Seitenfläche sowie der zweiten Seitenfläche; und
danach:
d) Reduzieren einer Dynamik des elektrischen Antriebsmotors durch die Steuereinrichtung zumindest in Abhängigkeit von zumindest der ermittelten Vorspannkraft oder des ersten Spiels, so dass während eines Abbremsens der Zapfen ausschließlich die in Schritt a) festgestellte Seitenfläche kontaktiert oder so dass bei einer Umkehrung der Drehbewegung der Zapfen das erste Spiel mit einer reduzierten ersten Drehgeschwindigkeit des Antriebsmotors überbrückt und sich an der anderen Seitenfläche anlegt und erst dann eine Erhöhung auf eine zweite Drehgeschwindigkeit erfolgt.

Die erste Scheibe ist drehfest mit einer Antriebswelle des Antriebsmotors verbunden. Es können eine oder mehrere Übersetzungen (z. B. Zahnradpaarungen) zwischen der ersten Scheibe und dem Antriebsmotor vorgesehen sein.

Die erste Scheibe und die zweite Scheibe sind insbesondere koaxial zueinander angeordnet, wobei die erste Scheibe über den Antriebsmotor drehbar und die zweite Scheibe über den Rampenmechanismus entlang der ersten axialen Richtung (also weg von der ersten Scheibe) verlagerbar sind. Weiter ist eine Feder insbesondere zwischen der zweiten Scheibe und der Kupplung vorgesehen, durch die die zweite Scheibe entlang der zweiten axialen Richtung (also hin zur ersten Scheibe) rückverlagerbar ist. Die Feder kann z. B. als eine oder eine Mehrzahl von Spiralfedern ausgeführt sein, die sich entlang der Umfangsrichtung erstrecken. Die Feder kann als Axialfeder ausgeführt sein, die bei einem selbsthemmungsfreien Rampenmechanismus die zweite Scheibe entlang der zweiten axialen Richtung zurückdrücken kann.

Die Scheiben weisen jeweils insbesondere eine Mehrzahl von Rampen (Rillen) auf, die sich entlang einer Umfangsrichtung erstrecken, wobei insbesondere in jeder Rampenpaarung (eine erste Rampe und eine zweite Rampe) eine Kugel angeordnet ist, die entlang der Rampen verschiebbar ist. Die Drehung der ersten Scheibe bzw. die auf die zweite Scheibe wirkende Rückstellkraft führt zu einer Verlagerung der Kugeln entlang der Umfangsrichtung in der jeweiligen Rampenpaarung, so dass ein Abstand zwischen erster Scheibe und zweiter Scheibe verändert wird.

Über die Verlagerung der zweiten Scheibe entlang der axialen Richtung kann die Kupplung betätigt (eingerückt oder ausgerückt) werden.

Die zweite Scheibe ist über einen Zapfen gegenüber einer Drehung in der Umfangsrichtung festgelegt bzw. gesichert. Insbesondere erstreckt sich der Zapfen entlang einer radialen Richtung von außen nach innen in eine Nut an der zweiten Scheibe.

Zwischen Nut und Zapfen ist ein erstes Spiel (also ein Unterschied zwischen einem Durchmesser des Zapfens und einem Abstand von erster Seitenfläche zu zweiter Seitenfläche) vorgesehen, das insbesondere zwischen 0,05 Millimetern und 1,0 Millimeter beträgt, insbesondere höchstens 0,5 Millimeter.

Infolge der starken Beschleunigung des Antriebsmotors und der erreichbaren hohen Drehgeschwindigkeiten kann es im Betrieb von (herkömmlichen) Aktuatoreinrichtungen dazu kommen, dass das Anschlagen des Zapfens an der jeweiligen Seitenfläche ein Klopfgeräusch verursacht. Weiterhin kann gerade beim Abbremsen des Antriebsmotors ausgehend von hohen Drehgeschwindigkeiten ein Unterschwingen und/oder Überschwingen und damit eine Umkehrung der Beschleunigungskräfte auftreten, so dass gerade im schwach federvorgespannten Bereich (insbesondere bei progressiver Federkennlinie der eingesetzten Feder) eine Schwingungserregung erfolgt und damit Geräusche zwischen Zapfen und zweiter Scheibe erzeugt werden.

Insbesondere wird die Feder mit zunehmender Verlagerung der zweiten Scheibe entlang der ersten axialen Richtung zunehmend verspannt, wobei der schwach federvorgespannte Bereich dann vorliegt, wenn die zweite Scheibe möglichst weit entlang der zweiten axialen Richtung verlagert angeordnet ist (Kupplung ausgerückt bzw. geöffnet).

Zur Vermeidung dieser Geräusche wird insbesondere vorgeschlagen, eine Dynamik (Drehgeschwindigkeit, Beschleunigung bzw. Abbremsen) des elektrischen Antriebsmotors durch die Steuereinrichtung zumindest in Abhängigkeit von zumindest der ermittelten Vorspannkraft oder des ersten Spiels zu reduzieren, so dass während eines Abbremsens des Antriebsmotors der Zapfen ausschließlich die in Schritt a) festgestellte Seitenfläche kontaktiert oder so dass bei einer Umkehrung der Drehbewegung der Zapfen das erste Spiel mit einer reduzierten ersten Drehgeschwindigkeit des Antriebsmotors überbrückt und sich an der anderen Seitenfläche anlegt und erst dann eine Erhöhung auf eine zweite Drehgeschwindigkeit erfolgt.

Insbesondere wird vorgeschlagen, dass bei einer Endanschlagsdetektion der Aktuator in einen mechanischen Endanschlag (z. B. wenn die Kugel an das Ende zumindest einer der Rampen anstößt) gefahren wird, wobei das Verfahren die Beschleunigung (bzw. das Abbremsen) und die Drehgeschwindigkeit so regelt, dass der Zapfen nicht an die andere Seitenfläche anstößt.

Die Endanschlagsdetektion kann bei einer Aufnahme des Betriebs des Aktuators angefahren werden. Bei der Aufnahme des Betriebs des Aktuators ist die Kupplung insbesondere ausgerückt (geöffnet) und wird zur Ermittlung einer eindeutigen Position des Aktuators zunächst in den Endanschlag gefahren.

Sobald der Endanschlag detektiert ist und die eindeutige Position des Aktuators ermittelt wurde, kann die Kupplung bis zum Erreichen des Kisspoints eingerückt (geschlossen) werden. Der "Kisspoint" ist insbesondere der Betriebspunkt einer Kupplung, bei der gerade ein Drehmoment durch die Kupplung übertragen werden kann.

Aufgrund der vorherigen Endanschlagsdetektion liegt der Zapfen noch an der einen Seitenfläche an. Sobald die Drehrichtung des Antriebsmotors umgedreht wird, wird der Zapfen (auch in Abhängigkeit von der Vorspannung der Feder) das erste Spiel überbrücken und die andere Seitenfläche kontaktieren. Durch das Verfahren wird dieser Umstand berücksichtigt und die Drehbewegung des Antriebsmotors mit reduzierter erster Drehgeschwindigkeit bzw. reduzierter Beschleunigung durchgeführt. Erst nach Kontaktierung der anderen Seitenfläche erfolgt die Erhöhung auf die zweite Drehgeschwindigkeit bzw. auf eine höhere Beschleunigung des Antriebsmotors.

Dieses Anfahren mit reduzierter Dynamik kann auch dann durchgeführt werden, wenn die Kupplung in dem Zeitpunkt einer Drehmomentanforderung in einem Bereich um den Kisspoint angeordnet ist. Da hier insbesondere eine geringe Federvorspannung vorliegt, kann die Lage des Zapfens gegenüber den Seitenflächen unbestimmt sein. Das Anfahren des Antriebsmotors mit reduzierter Dynamik ermöglicht auch hier ein Anlegen des Zapfens an die betreffende Seitenfläche, wobei das Erzeugen von Geräuschen vermieden wird.

Das Verfahren ist auch beim Ausrücken (Öffnen) der Kupplung einsetzbar. Insbesondere führen die bisher vorliegenden hohen Beschleunigungen (Abbremsungen) zu Unterschwingungen. Infolge der starken Abbremsung wird eine Umkehrung der Beschleunigungskräfte erzielt, so dass insbesondere im schwach federvorgespannten Bereich Schwingungen angeregt und Geräusche zwischen Zapfen und Seitenflächen erzeugt werden. Weiter kann die Feder der Dynamik des Antriebsmotors nicht folgen, so dass die Feder kurzzeitig abhebt und auf der zweiten Scheibe oder der Kupplung aufschlägt und zusätzliche Geräusche erzeugt.

Das Verfahren ermöglicht ein Abbremsen des Antriebsmotors und damit des Aktuators ohne Unterschwingungen und Kräfteumkehrung. Dabei wird die für den beabsichtigten Drehmomentabfall benötigte Zeit durch das vorliegend beschriebene Verfahren jedoch insbesondere nicht beeinflusst (also verlängert).

In Schritt c) kann zusätzlich ein zweites Spiel mindestens einer Übersetzung zwischen dem Antriebsmotor und der ersten Scheibe berücksichtigt werden. Das zweite Spiel umfasst insbesondere das Spiel von Zahnradpaarungen, die die mindestens eine Übersetzung ausbilden. Insbesondere kann auch hier mit einer verringerten Dynamik des Antriebsmotors abgebremst oder beschleunigt bzw. angefahren werden, so dass eine sichere Anlage der einander kontaktierenden Flächen (wenn die Aktuatoreinrichtung in einer Drehrichtung betrieben wird) sichergestellt wird.

Insbesondere wird das Verfahren durchgeführt, wenn der Aktuator in einen mechanischen Endanschlag verfahren wird. Der mechanische Endanschlag ist insbesondere dann erreicht, wenn die Kugel(.n) an das Ende zumindest einer der Rampen anstößt) gefahren wird, wobei das Verfahren die Beschleunigung (bzw. das Abbremsen) und die Drehgeschwindigkeit so regelt, dass der Zapfen nicht an die andere Seitenfläche anstößt.

Das Verfahren kann insbesondere dann durchgeführt werden, wenn der Aktuator aus einem mechanischen Endanschlag in eine erste Position verfahren wird, die einer Drehmomentanforderung der Kupplung entspricht. Die erste Position kann insbesondere der Kisspoint der Kupplung sein oder eine erste Position, bei der ein definierte Drehmoment über die Kupplung übertragbar ist.

Das Verfahren kann bei einem Schließen (Einrücken) der Kupplung durchgeführt werden, wobei während Schritt d) die erste Drehgeschwindigkeit konstant ist.

Insbesondere wird bei einem Schließen der Kupplung bis zum Erreichen und ggf. Durchfahren eines Übertragungsbereichs der Kupplung, in dem zwischen 5 und 15 Newtonmeter, insbesondere zwischen 7 und 12 Newtonmeter, übertragbar sind, der Antriebsmotor mit einer (ggf. variierenden) ersten Drehgeschwindigkeit betrieben, wobei der Antriebsmotor erst danach auf eine zweite Drehgeschwindigkeit beschleunigt wird.

Bevorzugt ist die erste Drehgeschwindigkeit in einem Übertragungsbereich der Kupplung konstant, in dem zwischen 5 und 15 Newtonmeter, insbesondere zwischen 7 und 12 Newtonmeter, übertragbar sind.

Wird die Kupplung über diesen Übertragungsbereich weiter eingerückt (hin zu höheren übertragbaren Drehmomenten) wird der Antriebsmotor insbesondere auf eine zweite Drehgeschwindigkeit beschleunigt.

Insbesondere ist die zweite Drehgeschwindigkeit um einen Faktor von mindestens zwei, bevorzugt drei, größer als die erste Drehgeschwindigkeit.

Das Verfahren kann in Abhängigkeit von einem Betrag eines mit einer Drehmomentanforderung angeforderten Drehmoments abwählbar sein.

Insbesondere beträgt der Betrag des angeforderten Drehmoments mindestens 50 Newtonmeter, bevorzugt mindestens 100 Newtonmeter.

Wenn das Verfahren abgewählt wird, wird der Antriebsmotor unmittelbar auf die zweite Drehgeschwindigkeit beschleunigt, so dass in diesen Situationen eine höchstmögliche Dynamik, die ein Beschleunigungsruck erzeugt, ausgenutzt werden kann.

Das Verfahren kann bei einem Öffnen der Kupplung durchgeführt werden. Insbesondere führen die bisher bei Aktuatorseinrichtungen eingesetzten hohen Beschleunigungen (Abbremsungen) zu Unterschwingungen. Infolge der starken Abbremsung wird eine Umkehrung der Beschleunigungskräfte erzielt, so dass insbesondere im schwach federvorgespannten Bereich Schwingungen angeregt und Geräusche zwischen Zapfen und Seitenflächen erzeugt werden. Weiter kann die Feder der Dynamik des Antriebsmotors nicht folgen, so dass die Feder kurzzeitig abhebt und auf der zweiten Scheibe oder der Kupplung aufschlägt und zusätzliche Geräusche erzeugt.

Ein Öffnen der Kupplung kann mit einer dritten Drehgeschwindigkeit des Antriebsmotors erfolgen, wobei unmittelbar vor Erreichen eines Kisspoints der Kupplung der Antriebsmotor eine gegenüber der dritten Drehgeschwindigkeit reduzierte vierte Drehgeschwindigkeit aufweist.

Die dritte Drehgeschwindigkeit ist insbesondere um einen Faktor von zwei, insbesondere von drei, größer als die vierte Drehgeschwindigkeit.

Bevorzugt nimmt während des Abbremsens des elektrischen Antriebsmotors eine dritte Drehgeschwindigkeit der ersten Scheibe exponentiell ab.

Insbesondere erfolgt die exponentielle Abnahme der dritten Drehgeschwindigkeit in einem Übertragungsbereich der Kupplung, in dem zwischen 5 und 15 Newtonmeter, insbesondere zwischen 7 und 12 Newtonmeter, übertragbar sind.

Es wird weiter ein Kraftfahrzeug vorgeschlagen, zumindest aufweisend eine Antriebseinheit (eine Verbrennungskraftmaschine oder eine elektrische Antriebseinheit, jeweils zum Antrieb des Kraftfahrzeugs), eine Kupplung sowie einen Aktuator für die Kupplung. Der Aktuator umfasst einen elektrischen Antriebsmotor und eine Steuereinrichtung, einen Rampenmechanismus mit einer drehbaren ersten Scheibe, die erste Rampen aufweist, einer nur entlang einer axialen Richtung verlagerbaren zweiten Scheibe, die zweite Rampen aufweist, und Kugeln, die in den ersten Rampen und zweiten Rampen zwischen den Scheiben angeordnet sind, sowie mindestens eine Feder zur Verlagerung der zweiten Scheibe entlang der axialen Richtung. Die Steuereinrichtung führt das hier beschriebene Verfahren durch bzw. kann das hier beschriebene Verfahren im Betrieb des Kraftfahrzeugs ausführen.

Vorsorglich sei angemerkt, dass die hier verwendeten Zahlwörter ("erste", "zweite",...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung, sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Gleiche Bezugszeichen bezeichnen gleiche Gegenstände, so dass ggf. Erläuterungen aus anderen Figuren ergänzend herangezogen werden können. Es zeigen schematisch:
- Fig. 1:: ein Kraftfahrzeug mit einem Aktuator und einem Teil einer Kupplung in einer Seitenansicht sowie mit einer Steuereinrichtung;
- Fig. 2:: den Aktuator und den Teil der Kupplung in einer anderen Seitenansicht, teilweise im Schnitt;
- Fig. 3:: eine zweite Scheibe des Aktuators in einer perspektivischen Ansicht;
- Fig. 4:: einen Teil der zweiten Scheibe nach Fig. 3 in einer Ansicht entlang der axialen Richtung zusammen mit dem Zapfen, in einer Explosionsdarstellung;
- Fig. 5:: eine erste Ausführungsvariante des Verfahrens; und
- Fig. 6:: eine zweite Ausführungsvariante des Verfahrens.

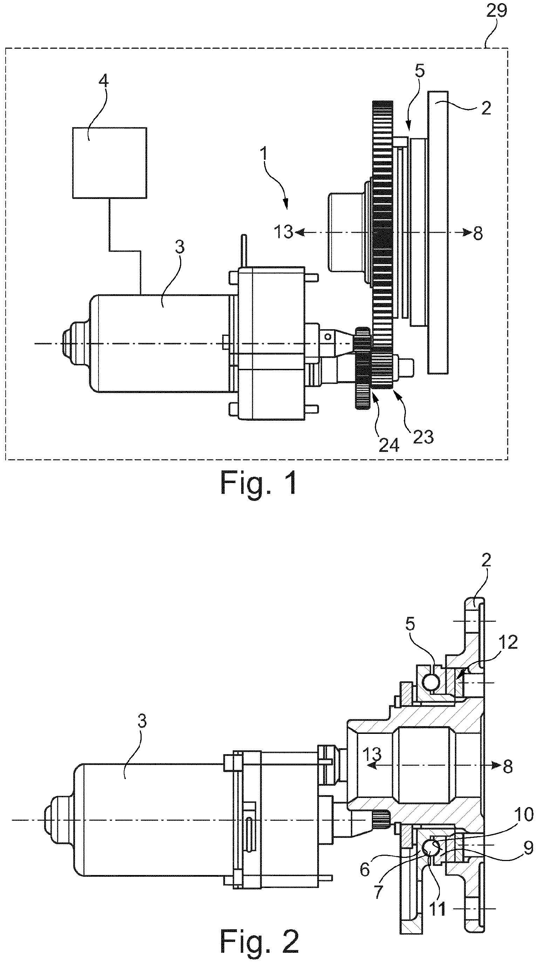

Fig. 1 zeigt ein Kraftfahrzeug 29 mit einem Aktuator 1 und einem Teil einer Kupplung 2 in einer Seitenansicht sowie mit einer Steuereinrichtung 4. Fig. 2 zeigt den Aktuator 1 und den Teil der Kupplung 2 in einer anderen Seitenansicht, teilweise im Schnitt. Die Fig. 1 und 2 werden im Folgenden gemeinsam beschrieben.

Der hier dargestellte Aufbau einer Kupplung 2 und eines Aktuators 1 ist z. B. aus der DE 100 65 355 C2 bekannt.

Der Aktuator 1 umfasst einen elektrischen Antriebsmotor 3 und eine Steuereinrichtung 4, einen Rampenmechanismus 5 mit einer drehbaren ersten Scheibe 6, die erste Rampen 7 aufweist, einer nur entlang einer axialen Richtung 8, 13 verlagerbaren zweiten Scheibe 9, die zweite Rampen 10 aufweist, und Kugeln 11, die in den ersten Rampen 7 und zweiten Rampen 10 zwischen den Scheiben 6, 9 angeordnet sind sowie einer Feder 12 zur Verlagerung der zweiten Scheibe 9 entlang der axialen Richtung 8, 13.

Die erste Scheibe 6 ist über den Antriebsmotor 3 drehbar und durch den Rampenmechanismus 5 damit die zweite Scheibe 9 entlang einer ersten axialen Richtung 8 zur Betätigung der Kupplung 2 verlagerbar. Die zweite Scheibe 9 ist durch die Feder 12 entlang einer zweiten axialen Richtung 13 verlagerbar und damit die erste Scheibe 6 drehbar.

Die erste Scheibe 6 ist drehfest mit einer Antriebswelle des Antriebsmotors 3 verbunden. Es sind zwei Übersetzungen (zwei Zahnradpaarungen) zwischen der ersten Scheibe 6 und dem Antriebsmotor 3 vorgesehen. Die erste Scheibe 6 und die zweite Scheibe 9 sind koaxial zueinander angeordnet, wobei die erste Scheibe 6 über den Antriebsmotor 3 drehbar und die zweite Scheibe 9 über den Rampenmechanismus 5 entlang der ersten axialen Richtung 8 (also weg von der ersten Scheibe 6) verlagerbar ist. Weiter ist eine Feder 12 zwischen der zweiten Scheibe 9 und der Kupplung 2 vorgesehen, durch die die zweite Scheibe 9 entlang der zweiten axialen Richtung 13 (also hin zur ersten Scheibe 6) rückverlagerbar ist.

Die Scheiben 6, 9 weisen jeweils eine Mehrzahl von Rampen 7, 10 (Rillen) auf, die sich entlang einer Umfangsrichtung 15, 17 erstrecken, wobei in jeder Rampenpaarung (eine erste Rampe 7 und eine zweite Rampe 10) eine Kugel 11 angeordnet ist, die entlang der Rampen 7, 10 verschiebbar ist. Die Drehung der ersten Scheibe 6 bzw. die auf die zweite Scheibe 9 wirkende Rückstellkraft führt zu einer Verlagerung der Kugeln 11 entlang der Umfangsrichtung 15, 17 in der jeweiligen Rampenpaarung, so dass ein Abstand zwischen erster Scheibe 6 und zweiter Scheibe 9 verändert wird. Über die Verlagerung der zweiten Scheibe 9 entlang der axialen Richtung 8, 13 kann die Kupplung 2 betätigt (eingerückt oder ausgerückt) werden.

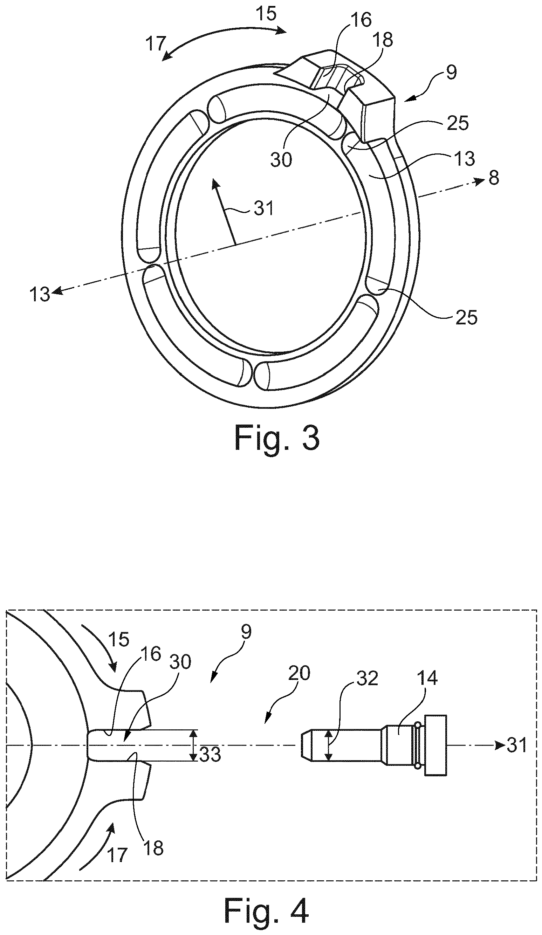

Fig. 3 zeigt eine zweite Scheibe 9 des Aktuators 1 in einer perspektivischen Ansicht. Fig. 4 zeigt einen Teil der zweiten Scheibe 9 nach Fig. 3 in einer Ansicht entlang der axialen Richtung 8 zusammen mit dem Zapfen 14, in einer Explosionsdarstellung. Die Fig. 3 und 4 werden im Folgenden gemeinsam beschrieben. Auf die Ausführungen zu Fig. 1 und 2 wird verwiesen. Auf die Fig. 1 und 2 wird im Folgenden ebenfalls Bezug genommen.

Die zweite Scheibe 9 ist über einen Zapfen 14, der mit einer Nut 30 an der zweiten Scheibe 9 zusammenwirkt, gegenüber einer Drehung in beiden Umfangsrichtungen 15, 17 gesichert. Der Zapfen 14 stützt sich zumindest in Abhängigkeit von einer Drehrichtung der ersten Scheibe 6 an einer, in eine erste Umfangsrichtung 15 weisende, ersten Seitenfläche 16 oder an einer, in eine zweite Umfangsrichtung 17 weisende, zweiten Seitenfläche 18 der Nut 30 ab. Der Zapfen 14 erstreckt sich entlang einer radialen Richtung 31 von außen nach innen in die Nut 30 an der zweiten Scheibe 9.

Zwischen Nut 30 und Zapfen 14 ist ein erstes Spiel 20 (also ein Unterschied zwischen einem Durchmesser 32 des Zapfens 14 und einem Abstand 33 von erster Seitenfläche 16 zu zweiter Seitenfläche 18) vorgesehen.

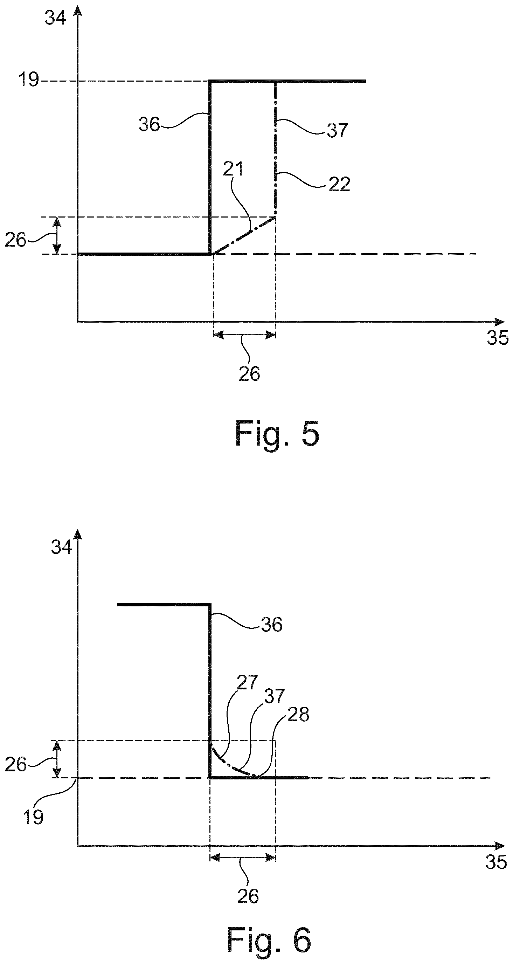

Das Verfahren umfasst bei einem bevorstehenden Abbremsen einer Drehbewegung des Antriebsmotors 3 oder einer Umkehrung der Drehbewegung des Antriebsmotors 3 zumindest die Schritte a) bis d). In Schritt a) erfolgt das Feststellen einer aktuell vorliegenden Drehrichtung der ersten Scheibe 6 und das Bestimmen der Seitenfläche 16, 18, an der der Zapfen 14 sich während der Drehung der ersten Scheibe 6 abstützt. Gemäß Schritt b) erfolgt die Ermittlung einer Vorspannkraft der Feder 12 in Abhängigkeit von einer Position 19 der zweiten Scheibe 9 entlang der axialen Richtung 8, 13. Gemäß Schritt c) erfolgt die Ermittlung eines ersten Spiels 20 zwischen dem Zapfen 14 und der ersten Seitenfläche 16 sowie der zweiten Seitenfläche 18. In Schritt c) kann zusätzlich ein zweites Spiel 23 der Übersetzung 24 zwischen dem Antriebsmotor 3 und der ersten Scheibe 6 berücksichtigt werden. Das zweite Spiel 23 umfasst das Spiel von Zahnradpaarungen, die die Übersetzung 24 ausbilden. Dabei kann auch hier mit einer verringerten Dynamik des Antriebsmotors 3 abgebremst oder beschleunigt bzw. angefahren werden, so dass eine sichere Anlage der einander kontaktierenden Flächen (wenn die Aktuatoreinrichtung in einer Drehrichtung betrieben wird) sichergestellt wird. Gemäß Schritt d) erfolgt ein Reduzieren einer Dynamik des elektrischen Antriebsmotors 3 durch die Steuereinrichtung 4 zumindest in Abhängigkeit von zumindest der ermittelten Vorspannkraft oder des ersten Spiels 20, so dass während eines Abbremsens der Zapfen 14 ausschließlich die in Schritt a) festgestellte Seitenfläche 16, 18 kontaktiert oder so dass bei einer Umkehrung der Drehbewegung der Zapfen 14 das erste Spiel 20 mit einer reduzierten ersten Drehgeschwindigkeit 21 (siehe Fig. 5) des Antriebsmotors 3 überbrückt und sich an der anderen Seitenfläche 16 anlegt und erst dann eine Erhöhung auf eine zweite Drehgeschwindigkeit 22 erfolgt.

Infolge der starken Beschleunigung des Antriebsmotors 3 und der erreichbaren hohen Drehgeschwindigkeiten 21, 22, 27, 28 kann es im Betrieb von Aktuatoreinrichtungen dazu kommen, dass das Anschlagen des Zapfens 14 an der jeweiligen Seitenfläche 16, 18 ein Klopfgeräusch verursacht. Weiterhin kann gerade beim Abbremsen des Antriebsmotors 3 ausgehend von hohen Drehgeschwindigkeiten 21, 22, 27, 28 ein Unterschwingen und/oder Überschwingen und damit eine Umkehrung der Beschleunigungskräfte auftreten, so dass gerade im schwach federvorgespannten Bereich (insbesondere bei progressiver Federkennlinie der eingesetzten Feder 12) eine Schwingungserregung erfolgt und damit Geräusche zwischen Zapfen 14 und zweiter Scheibe 9 erzeugt werden. Die Feder 12 wird hier mit zunehmender Verlagerung der zweiten Scheibe 9 entlang der ersten axialen Richtung 8 zunehmend verspannt, wobei der schwach federvorgespannte Bereich dann vorliegt, wenn die zweite Scheibe 9 möglichst weit entlang der zweiten axialen Richtung 13 verlagert angeordnet ist (Kupplung 2 ausgerückt bzw. geöffnet).

Zur Vermeidung dieser Geräusche wird vorgeschlagen, eine Dynamik (Drehgeschwindigkeit, Beschleunigung bzw. Abbremsen) des elektrischen Antriebsmotors 3 durch die Steuereinrichtung 4 zumindest in Abhängigkeit von zumindest der ermittelten Vorspannkraft oder des ersten Spiels 20 zu reduzieren.

Bei einer Endanschlagsdetektion wird der Aktuator 1 in einen mechanischen Endanschlag 25 (z. B. wenn die Kugel 11 an das Ende zumindest einer der Rampen 7, 10 anstößt) gefahren wird, wobei das Verfahren die Beschleunigung (bzw. das Abbremsen) und die Drehgeschwindigkeit 21, 22, 27, 28 so regelt, dass der Zapfen 14 nicht an die andere Seitenfläche 16, 18 anstößt.

Die Endanschlagsdetektion kann bei einer Aufnahme des Betriebs des Aktuators 1 angefahren werden. Bei der Aufnahme des Betriebs des Aktuators 1 ist die Kupplung 2 insbesondere ausgerückt (geöffnet) und wird zur Ermittlung einer eindeutigen Position 19 des Aktuators 1 zunächst in den Endanschlag 25 gefahren.

Sobald der Endanschlag 25 detektiert ist und die eindeutige Position 19 des Aktuators 1 ermittelt wurde, kann die Kupplung 2 z. B. bis zum Erreichen einer ersten Position 19 verfahren werden.

Fig. 5 zeigt eine erste Ausführungsvariante des Verfahrens. In dem Diagramm ist auf der vertikalen Achse eine Drehbewegung des Antriebsmotors 3 in Winkelschritten 34 (z. B. jeweils 2, 4, 6 oder 8, etc. Winkelgrad) aufgetragen. Auf der horizontalen Achse ist die Zeit 35 aufgetragen. Der erste Verlauf 36 zeigt die bekannte Betriebsart des Aktuators 1. Der zweite Verlauf 37 zeigt den Betrieb des Aktuators nach dem Verfahren.

Aufgrund der vorherigen Endanschlagsdetektion 25 liegt der Zapfen 14 noch an der einen Seitenfläche 16, 18 an. Sobald die Drehrichtung des Antriebsmotors 3 umgedreht wird, wird der Zapfen 14 (auch in Abhängigkeit von der Vorspannung der Feder 12) das erste Spiel 20 überbrücken und die andere Seitenfläche 18, 16 kontaktieren. Durch das Verfahren wird dieser Umstand berücksichtigt und die Drehbewegung des Antriebsmotors 3 mit reduzierter erster Drehgeschwindigkeit 21 bzw. reduzierter Beschleunigung durchgeführt. Erst nach Kontaktierung der anderen Seitenfläche 16, 18 erfolgt die Erhöhung auf die zweite Drehgeschwindigkeit 22 bzw. auf eine höhere Beschleunigung des Antriebsmotors 3.

Das Verfahren wird hier bei einem Schließen (Einrücken) der Kupplung 2 durchgeführt werden, wobei während Schritt d) die erste Drehgeschwindigkeit 21 konstant ist. Hier wird bei dem Schließen der Kupplung 2 bis zum Erreichen und Durchfahren eines Übertragungsbereichs 26 der Kupplung 2 der Antriebsmotor 3 mit einer konstanten ersten Drehgeschwindigkeit 21 betrieben, wobei der Antriebsmotor 3 erst danach auf eine zweite Drehgeschwindigkeit 22 beschleunigt wird.

Dieses Anfahren mit reduzierter Dynamik kann auch dann durchgeführt werden, wenn die Kupplung 2 in dem Zeitpunkt einer Drehmomentanforderung in einem Bereich um den Kisspoint angeordnet ist. Da hier insbesondere eine geringe Federvorspannung vorliegt, kann die Lage des Zapfens 14 gegenüber den Seitenflächen 16, 18 unbestimmt sein. Das Anfahren des Antriebsmotors 3 mit reduzierter Dynamik ermöglicht auch hier ein Anlegen des Zapfens 14 an die betreffende Seitenfläche 16, 18, wobei das Erzeugen von Geräuschen vermieden wird.

Fig. 6 zeigt eine zweite Ausführungsvariante des Verfahrens. In dem Diagramm ist auf der vertikalen Achse eine Drehbewegung des Antriebsmotors 3 in Winkelschritten 34 (z. B. jeweils 2, 4, 6 oder 8, etc. Winkelgrad) aufgetragen. Auf der horizontalen Achse ist die Zeit 35 aufgetragen. Der erste Verlauf 36 zeigt die bekannte Betriebsart des Aktuators 1. Der zweite Verlauf 37 zeigt den Betrieb des Aktuators nach dem Verfahren.

Das Verfahren ist beim Ausrücken (Öffnen) der Kupplung 2 dargestellt. Das Verfahren ermöglicht ein Abbremsen des Antriebsmotors 3 und damit des Aktuators 1 ohne Unterschwingungen und Kräfteumkehrung. Ein Öffnen der Kupplung 2 erfolgt mit einer dritten Drehgeschwindigkeit 27 des Antriebsmotors, wobei unmittelbar vor Erreichen eines Kisspoints (hier die erste Position 19) der Kupplung 2 der Antriebsmotor 3 eine gegenüber der dritten Drehgeschwindigkeit 27 reduzierte vierte Drehgeschwindigkeit 28 aufweist. Während des Abbremsens des elektrischen Antriebsmotors 3 nimmt eine dritte Drehgeschwindigkeit 27 der ersten Scheibe 6 exponentiell ab. Die exponentielle Abnahme der dritten Drehgeschwindigkeit 27 erfolgt in einem Übertragungsbereich 26 der Kupplung 2.

### Bezugszeichenliste

- 1: Aktuator
- 2: Kupplung
- 3: Antriebsmotor
- 4: Steuereinrichtung
- 5: Rampenmechanismus
- 6: erste Scheibe
- 7: erste Rampe
- 8: erste axiale Richtung
- 9: zweite Scheibe
- 10: zweite Rampe
- 11: Kugeln
- 12: Feder
- 13: zweite axiale Richtung
- 14: Zapfen
- 15: erste Umfangsrichtung
- 16: erste Seitenfläche
- 17: zweite Umfangsrichtung
- 18: zweite Seitenfläche
- 19: Position
- 20: erstes Spiel
- 21: erste Drehgeschwindigkeit
- 22: zweite Drehgeschwindigkeit
- 23: zweites Spiel
- 24: Übersetzung
- 25: Endanschlag
- 26: Übertragungsbereich
- 27: dritte Drehgeschwindigkeit
- 28: vierte Drehgeschwindigkeit
- 29: Kraftfahrzeug
- 30: Nut
- 31: radiale Richtung
- 32: Durchmesser
- 33: Abstand
- 34: Winkelschritt
- 35: Zeit
- 36: erster Verlauf
- 37: zweiter Verlauf

## Patentansprüche

1. Verfahren zur Steuerung eines Aktuators (1) einer Aktuatoreinrichtung, zumindest aufweisend eine Kupplung (2) sowie einen Aktuator (1) mit
• einem elektrischen Antriebsmotor (3) und einer Steuereinrichtung (4),
• einem Rampenmechanismus (5) mit einer drehbaren ersten Scheibe (6), die erste Rampen (7) aufweist, einer nur entlang einer axialen Richtung (8, 13) verlagerbaren zweiten Scheibe (9), die zweite Rampen (10) aufweist, und Kugeln (11), die in den ersten Rampen (7) und zweiten Rampen (10) zwischen den Scheiben (6, 9) angeordnet sind,
• mindestens einer Feder (12) zur Verlagerung der zweiten Scheibe (9) entlang der axialen Richtung (8);
wobei die erste Scheibe (6) über den Antriebsmotor (3) drehbar und durch den Rampenmechanismus (5) damit die zweite Scheibe (9) entlang einer ersten axialen Richtung (8) zur Betätigung der Kupplung (2) sowie die zweite Scheibe (9) durch die mindestens eine Feder (12) entlang einer zweiten axialen Richtung (13) verlagerbar und damit die erste Scheibe (6) drehbar ist; wobei die zweite Scheibe (9) über einen Zapfen (14), der mit einer Nut (30) an der zweiten Scheibe (9) zusammenwirkt, gegenüber einer Drehung in einer Umfangsrichtung (15, 17) gesichert ist; wobei sich der Zapfen (14) zumindest in Abhängigkeit von einer Drehrichtung der ersten Scheibe (6) an einer, in eine erste Umfangsrichtung (15) weisende, ersten Seitenfläche (16) oder an einer, in eine zweite Umfangsrichtung (17) weisende, zweiten Seitenfläche (18) der Nut (30) abstützt, **dadurch gekennzeichnet, dass** das Verfahren bei einem bevorstehenden Abbremsen oder einer Umkehrung der Drehbewegung des Antriebsmotors (3) zumindest die folgenden Schritte umfasst:
a) Feststellen einer aktuell vorliegenden Drehrichtung der ersten Scheibe (6) und Bestimmen der Seitenfläche (16, 18), an der der Zapfen (14) sich während der Drehung der ersten Scheibe (6) abstützt; und
zumindest eines von
b) Ermittlung einer Vorspannkraft der mindestens einen Feder (12) in Abhängigkeit von einer Position (19) der zweiten Scheibe (9) entlang der axialen Richtung (8, 13); und
c) Ermittlung eines ersten Spiels (20) zwischen dem Zapfen (14) und der ersten Seitenfläche (16) sowie der zweiten Seitenfläche (18); und
danach
d) Reduzieren einer Dynamik des elektrischen Antriebsmotors (3) durch die Steuereinrichtung (4) zumindest in Abhängigkeit von zumindest der ermittelten Vorspannkraft oder des ersten Spiels (20), so dass während eines Abbremsens der Zapfen (14) ausschließlich die in Schritt a) festgestellte Seitenfläche (16, 18) kontaktiert oder so dass bei einer Umkehrung der Drehbewegung der Zapfen (14) das erste Spiel (20) mit einer reduzierten ersten Drehgeschwindigkeit (21) des Antriebsmotors (3) überbrückt und sich an der anderen Seitenfläche (18, 16) anlegt und erst dann eine Erhöhung auf eine zweite Drehgeschwindigkeit (22) erfolgt.

2. Verfahren nach Patentanspruch 1, wobei in Schritt c) zusätzlich ein zweites Spiel (23) mindestens einer Übersetzung (24) zwischen dem Antriebsmotor (3) und der ersten Scheibe (6) berücksichtigt wird.

3. Verfahren nach einem der vorhergehenden Patentansprüche, wobei das Verfahren durchgeführt wird, wenn der Aktuator (1) in einen mechanischen Endanschlag (25) verfahren wird.

4. Verfahren nach einem der vorhergehenden Patentansprüche, wobei das Verfahren durchgeführt wird, wenn der Aktuator (1) aus einem mechanischen Endanschlag (25) in eine Position (19) verfahren wird, die einer Drehmomentanforderung der Kupplung (2) entspricht.

5. Verfahren nach einem der vorhergehenden Patentansprüche, wobei das Verfahren bei einem Schließen der Kupplung (2) durchgeführt wird, wobei während Schritt d) die erste Drehgeschwindigkeit (21) konstant ist.

6. Verfahren nach Patentanspruch 5, wobei die erste Drehgeschwindigkeit (21) in einem Übertragungsbereich (26) der Kupplung (2) konstant ist, in dem zwischen 5 und 15 Newtonmeter übertragbar sind.

7. Verfahren nach einem der vorhergehenden Patentansprüche, wobei das Verfahren in Abhängigkeit von einem Betrag eines mit einer Drehmomentanforderung angeforderten Drehmoments abwählbar ist.

8. Verfahren nach Patentanspruch 7, wobei der Betrag des angeforderten Drehmoments mindestens 50 Newtonmeter beträgt.

9. Verfahren nach einem der vorhergehenden Patentansprüche, wobei das Verfahren bei einem Öffnen der Kupplung (2) durchgeführt wird.

10. Verfahren nach Patentanspruch 9, wobei ein Öffnen der Kupplung (2) mit einer dritten Drehgeschwindigkeit (27) des Antriebsmotors (3) erfolgt, wobei unmittelbar vor Erreichen eines Kisspoints der Kupplung (2) der Antriebsmotor (3) eine gegenüber der dritten Drehgeschwindigkeit (27) reduzierte vierte Drehgeschwindigkeit (28) aufweist.

11. Verfahren nach Patentanspruch 10, wobei während des Abbremsens des elektrischen Antriebsmotors (3) die dritte Drehgeschwindigkeit (27) der ersten Scheibe (6) exponentiell abnimmt.

12. Verfahren nach Patentanspruch 11, wobei die exponentielle Abnahme der dritten Drehgeschwindigkeit (27) in einem Übertragungsbereich (26) der Kupplung (2) erfolgt, in dem zwischen 5 und 15 Newtonmeter übertragbar sind.

13. Kraftfahrzeug (29), zumindest aufweisend einen Antriebsmotor (3), eine Kupplung (2) sowie einen Aktuator (1) für die Kupplung (2), wobei der Aktuator (1) einen elektrischen Antriebsmotor (3) und eine Steuereinrichtung (4), einen Rampenmechanismus (5) mit einer drehbaren ersten Scheibe (6), die erste Rampen (7) aufweist, einer nur entlang einer axialen Richtung (8, 13) verlagerbaren zweiten Scheibe (9), die zweite Rampen (10) aufweist, und Kugeln (11), die in den ersten Rampen (7) und zweiten Rampen (10) zwischen den Scheiben (6, 9) angeordnet sind, sowie mindestens einer Feder (12) zur Verlagerung der zweiten Scheibe (9) entlang der axialen Richtung (8, 13), aufweist; **dadurch gekennzeichnet, dass** die Steuereinrichtung (4) das Verfahren nach einem der vorhergehenden Patentansprüche durchführt.

## Claims

1. Method for controlling an actuator (1) of an actuator device, at least comprising a clutch (2) and an actuator (1) with
• an electric drive motor (3) and a control device (4),
• a ramp mechanism (5) which comprises a rotatable first disk (6), which has first ramps (7), a second disk (9), which can be moved only in an axial direction (8, 13) and which has second ramps (10), and balls (11), which are arranged between the disks (6, 9) in the first ramps (7) and second ramps (10),
• at least one spring (12) for moving the second disk (9) in the axial direction (8);
wherein the first disk (6) is rotatable via the drive motor (3) and by means of the ramp mechanism (5) the second disk (9) is movable thereby in a first axial direction (8) for actuating the clutch (2) and the second disk (9) is movable by the at least one spring (12) in a second axial direction (13) and the first disk (6) is rotatable thereby; wherein the second disk (9) is secured via a pin (14) which cooperates with a groove (30) on the second disk (9) relative to a rotation in a circumferential direction (15, 17); wherein the pin (14) is supported at least according to a rotational direction of the first disk (6) on a first side surface (16) facing in a first circumferential direction (15) or on a second side surface (18) of the groove (30) facing in a second circumferential direction (17), **characterized in that** in the event of an imminent braking or a reversal of the rotational motion of the drive motor (3) the method comprises at least the following steps:
a) a currently present rotational direction of the first disk (6) is established and the side surface (16, 18) on which the pin (14) is supported during the rotation of the first disk (6) is determined; and
at least one of
b) a preloading force of the at least one spring (12) is determined according to a position (19) of the second disk (9) in the axial direction (8, 13); and
c) a first play (20) is determined between the pin (14) and the first side surface (16) as well as the second side surface (18); and
then
d) the dynamics of the electric drive motor (3) are reduced by the control device (4) at least in dependence on at least the determined preloading force or the first play (20) in such a way that, during braking, the pin (14) contacts only the side surface (16, 18) established in step a) or that in the event of a reversal of the rotational motion, the pin (14) bridges the first play (20) at a reduced first rotational speed (21) of the drive motor (3) and comes into contact with the other side surface (18, 16) and only then does an increase to a second rotational speed (22) occur.

2. Method as claimed in claim 1, wherein in step c) a second play (23) of at least one speed-transforming gear (24) between the drive motor (3) and the first disk (6) is additionally taken into account.

3. Method as claimed in one of the preceding claims, wherein the method is carried out when the actuator (1) is moved into a mechanical end stop (25).

4. Method as claimed in one of the preceding claims, wherein the method is carried out when the actuator (1) is moved out of a mechanical end stop (25) into a position (19) which corresponds to a torque requirement of the clutch (2).

5. Method as claimed in one of the preceding claims, wherein the method is carried out when the clutch (2) is closed, wherein during step d) the first rotational speed (21) is constant.

6. Method as claimed in claim 5, wherein the first rotational speed (21) is constant in a transmission region (26) of the clutch (2) in which between 5 and 15 newton meters are able to be transmitted.

7. Method as claimed in one of the preceding claims, wherein the method is able to be deselected according to an amount of torque which is required in the event of a torque requirement.

8. Method as claimed in claim 7, wherein the amount of the requested torque is at least 50 newton meters.

9. Method as claimed in one of the preceding claims, wherein the method is carried out when the clutch (2) is opened.

10. Method as claimed in claim 9, wherein the clutch (2) is opened at a third rotational speed (27) of the drive motor (3), wherein directly before reaching a kiss point of the clutch (2) the drive motor (3) has a fourth rotational speed (28) which is reduced relative to the third rotational speed (27).

11. Method as claimed in claim 10, wherein during the braking of the electric drive motor (3) the third rotational speed (27) of the first disk (6) decreases exponentially.

12. Method as claimed in claim 11, wherein the exponential decrease in the third rotational speed (27) takes place in a transmission region (26) of the clutch (2) in which between 5 and 15 newton meters are able to be transmitted.

13. Motor vehicle (29) at least comprising a drive motor (3), a clutch (2) as well as an actuator (1) for the clutch (2), wherein the actuator (1) comprises an electric drive motor (3) and a control device (4), a ramp mechanism (5) which comprises a rotatable first disk (6), which has first ramps (7), a second disk (9) which can be moved only in an axial direction (8, 13) and which has second ramps (10), and balls (11) which are arranged between the disks (6, 9) in the first ramps (7) and second ramps (10), and at least one spring (12) for moving the second disk (9) in the axial direction (8, 13); **characterized in that** the control device (4) carries out the method as claimed in one of the preceding claims.

## Revendications

1. Procédé de commande d'un actionneur (1) d'un dispositif actionneur, comprenant au moins un embrayage (2), ainsi qu'un actionneur (1) comportant
- un moteur d'entraînement électrique (3) et un dispositif de commande (4),
- un mécanisme à rampes (5) comportant un premier disque rotatif (6), qui comprend des premières rampes (7), un deuxième disque (9) pouvant être déplacé uniquement le long d'une direction axiale (8, 13), qui comprend des deuxièmes rampes (10), et des billes (11), qui sont agencées dans les premières rampes (7) et les deuxièmes rampes (10) entre les disques (6, 9),
- au moins un ressort (12) pour le déplacement du deuxième disque (9) le long de la direction axiale (8) ;
le premier disque (6) pouvant être mis en rotation par l'intermédiaire du moteur d'entraînement (3) et le deuxième disque (9) pouvant par conséquent être déplacé par le mécanisme à rampes (5) le long d'une première direction axiale (8) pour l'actionnement de l'embrayage (2), et le deuxième disque (9) pouvant être déplacé par l'au moins un ressort (12) le long d'une deuxième direction axiale (13), et le premier disque (6) pouvant par conséquent être mis en rotation ; le deuxième disque (9) étant bloqué par l'intermédiaire d'un tenon (14), qui coopère avec une rainure (30) sur le deuxième disque (9), vis-à-vis d'une rotation dans une direction circonférentielle (15, 17) ; le tenon (14) venant en appui au moins en fonction d'une direction de rotation du premier disque (6) sur une première surface latérale (16), orientée dans une première direction circonférentielle (15), ou sur une deuxième surface latérale (18), orientée dans une deuxième direction circonférentielle (17), de la rainure (30), **caractérisé en ce que** le procédé comprend au moins les étapes suivantes en cas de freinage imminent ou d'inversion du mouvement de rotation du moteur d'entraînement (3) :
a) l'établissement d'une direction de rotation actuellement présente du premier disque (6) et la détermination de la surface latérale (16, 18) sur laquelle le tenon (14) vient en appui pendant la rotation du premier disque (6) ; et
au moins une parmi
b) la détection d'une force de précontrainte de l'au moins un ressort (12) en fonction d'une position (19) du deuxième disque (9) le long de la direction axiale (8, 13) ; et
c) la détection d'un premier jeu (20) entre le tenon (14) et la première surface latérale (16), ainsi que la deuxième surface latérale (18) ; et
ensuite
d) la réduction d'une dynamique du moteur d'entraînement électrique (3) par le dispositif de commande (4) au moins en fonction d'au moins la force de précontrainte détectée ou du premier jeu (20), de telle sorte que, pendant un freinage, le tenon (14) vient en contact exclusivement avec la surface latérale (16, 18) établie dans l'étape a), ou de telle sorte qu'en cas d'inversion du mouvement de rotation, le tenon (14) couvre le premier jeu (20) à une première vitesse de rotation réduite (21) du moteur d'entraînement (3) et vient en appui sur l'autre surface latérale (18, 16) et seulement ensuite une augmentation à une deuxième vitesse de rotation (22) a lieu.

2. Procédé selon la revendication 1, dans lequel, dans l'étape c), un deuxième jeu (23) d'au moins une transmission (24) entre le moteur d'entraînement (3) et le premier disque (6) est en outre pris en compte.

3. Procédé selon l'une quelconque des revendications précédentes, dans lequel le procédé est réalisé lorsque l'actionneur (1) est déplacé dans une butée d'extrémité mécanique (25).

4. Procédé selon l'une quelconque des revendications précédentes, dans lequel le procédé est réalisé lorsque l'actionneur (1) est déplacé hors d'une butée d'extrémité mécanique (25) dans une position (19) qui correspond à une exigence en matière de couple de l'embrayage (2).

5. Procédé selon l'une quelconque des revendications précédentes, dans lequel le procédé est réalisé lors d'une fermeture de l'embrayage (2), la première vitesse de rotation (21) étant constante pendant l'étape d).

6. Procédé selon la revendication 5, dans lequel la première vitesse de rotation (21) est constante dans une zone de transmission (26) de l'embrayage (2), dans laquelle entre 5 et 15 newtons-mètres peuvent être transmis.

7. Procédé selon l'une quelconque des revendications précédentes, dans lequel le procédé peut être sélectionné en fonction d'un montant d'un couple exigé par une exigence en matière de couple.

8. Procédé selon la revendication 7, dans lequel le montant du couple exigé est d'au moins 50 newtons-mètres.

9. Procédé selon l'une quelconque des revendications précédentes, dans lequel le procédé est réalisé lors d'une ouverture de l'embrayage (2).

10. Procédé selon la revendication 9, dans lequel une ouverture de l'embrayage (2) a lieu à une troisième vitesse de rotation (27) du moteur d'entraînement (3), le moteur d'entraînement (3) présentant, immédiatement avant d'atteindre un point d'effleurement de l'embrayage (2), une quatrième vitesse de rotation (28) réduite par rapport à la troisième vitesse de rotation (27).

11. Procédé selon la revendication 10, dans lequel la troisième vitesse de rotation (27) du premier disque (6) diminue exponentiellement pendant le freinage du moteur d'entraînement électrique (3).

12. Procédé selon la revendication 11, dans lequel la diminution exponentielle de la troisième vitesse de rotation (27) a lieu dans une zone de transmission (26) de l'embrayage (2), dans laquelle entre 5 et 15 newtons-mètres peuvent être transmis.

13. Véhicule automobile (29), comprenant au moins un moteur d'entraînement (3), un embrayage (2), ainsi qu'un actionneur (1) pour l'embrayage (2), l'actionneur (1) comprenant un moteur d'entraînement électrique (3) et un dispositif de commande (4), un mécanisme à rampes (5) comportant un premier disque rotatif (6), qui comprend des premières rampes (7), un deuxième disque (9) pouvant être déplacé uniquement le long d'une direction axiale (8, 13), qui comprend des deuxièmes rampes (10), et des billes (11), qui sont agencées dans les premières rampes (7) et les deuxièmes rampes (10) entre les disques (6, 9), ainsi qu'au moins un ressort (12) pour le déplacement du deuxième disque (9) le long de la direction axiale (8, 13) ; **caractérisé en ce que** le dispositif de commande (4) réalise le procédé selon l'une quelconque des revendications précédentes.
